# EUROPÄISCHE PATENTSCHRIFT

(11) **EP 1 237 777 B1**
(45) Veröffentlichungstag und Bekanntmachung des Hinweises auf die Patenterteilung: **06.08.2003**
(21) Anmeldenummer: 00987294.6
(22) Anmeldetag: 25.11.2000
(51) Int. Cl.: B62D 5/04, B62D 3/02, F16H 13/02

(54) **LENKVORRICHTUNG FÜR KRAFTFAHRZEUGE**
STEERING DEVICE FOR A VEHICLE
DISPOSITIF DE DIRECTION POUR VEHICULES AUTOMOBILES

(30) Priorität: 17.12.1999 DE 19961018; 01.07.2000 DE 10032120
(43) Veröffentlichungstag der Anmeldung: 11.09.2002
(73) Patentinhaber: ZF Lenksysteme GmbH, 73527 Schwäbisch Gmünd (DE)
(72) Erfinder: BUDAKER, Martin, 73540 Heubach (DE); KOGEL, Walter, 73453 Neubronn (DE)
(86) Internationale Anmeldenummer: EP0011760
(87) Internationale Veröffentlichungsnummer: WO01044037

(56) Entgegenhaltungen:
- EP-A- 0 376 457
- EP-A- 0 870 669
- JP-A- 11 182 643
- US-A- 4 593 780

## Beschreibung

Die Erfindung betrifft eine Lenkvorrichtung für Kraftfahrzeuge nach der im Oberbegriff von Anspruch 1 näher definierten Art.

Lenkvorrichtungen für Kraftfahrzeuge übertragen einen über ein Lenkhandrad eingeleiteten Lenkwunsch an ein Stellglied, auch Lenkaktuator genannt.
Bei elektrisch unterstützten Lenkvorrichtungen wird eine Servounterstützung durch einen Elektromotor bewerkstelligt. Dabei kann es sich um eine Hilfskraft oder um eine Fremdkraft handeln.
Je nach Ausführungsform der Lenkvorrichtung kann die Servounterstützung an verschiedenen Stellen und durch verschiedene Anordnungen zur Verfügung gestellt werden.

Bei großen Lenkkräften und hohen Lenkachslasten umschließt der Elektromotor zentrisch eine Schubstange und überträgt die Servounterstützung über einen Kugelumlaufmechanismus direkt auf die Schubstange. Diese Anordnungen werden auch häufig bei steer-by-wire- und Hinterachs-Lenksystemen verwendet.
Diese Anordnung hat den Nachteil, daß nur kleine Übersetzungen zwischen der Antriebsseite und der Abtriebsseite dargestellt werden können. Infolgedessen muß der Elektromotor schon bei kleinen Drehzahlen ein hohes Drehmoment zur Verfügung stellen können. Dies kann nur dadurch erreicht werden, daß das Volumen des Elektromotors dementsprechend angepasst wird, was dazu führt, daß mehr Einbauraum zur Verfügung gestellt werden muß. Durch die unmittelbare Nähe von anderen Aggregaten, wie beispielsweise Fahrzeugmotor oder Differential, kann dieser zusätzlich benötigte Einbauraum nur selten realisiert werden. Zudem kann sich die Wärmeabstrahlung dieser Aggregate negativ auf das Funktionsverhalten des Lenksystems, insbesondere des Elektromotors, auswirken.

Bei mittleren Anforderungen an die Lenkvorrichtung in Bezug auf Lenkkraft und Lenkachslast wirkt der Elektromotor auf ein Antriebsritzel, welches mit einer Schubstange in Wirkverbindung steht. In einer Variante weisen diese Lenkvorrichtungen zwei Antriebsritzel auf, wobei ein Antriebsritzel über eine Lenksäule mit einem Lenkhandrad in Wirkverbindung steht und ein zweites Antriebsritzel über den Elektromotor angetrieben wird.
Diese Lenkvorrichtungen bieten Vorteile bezüglich der Freiheitsgrade der räumlichen Anordnung des Elektromotors sowie der Kollisionsumgehung mit anderen Aggregaten. Nachteilig an diesen Lenkvorrichtungen ist die Tatsache, daß das maximal übertragbare Drehmoment aufgrund der Verzahnung Antriebsritzel/Schubstange beschränkt ist. Bei der Lenkvorrichtung mit zwei Antriebsritzeln kommt als weiteres Problem hinzu, daß zwei Verzahnungen auf einer Schubstange in einem engen Toleranzfeld zueinander laufen, damit sie mit beiden Antriebsritzeln praktisch spielfrei kämmen.

Die in der DE 198 52 447 A1 beschriebene Lenkvorrichtung für Kraftfahrzeuge weist eine Eingangswelle auf, die mit einem Lenkhandrad über ein drehelastisches Element in Wirkverbindung steht. Über ein Planetengetriebe wird die eingeleitete Drehbewegung an ein als Antriebsritzel ausgebildetes Ausgangsglied weitergeleitet und auf eine Schubstange übertragen. Auf das Planetengetriebe und damit auch auf das Ausgangsglied wirkt zusätzlich ein Elektromotor über ein Schneckengetriebe.

Diese Lenkvorrichtung ist durch die Kombination von Planeten- und Schneckengetriebe sehr aufwendig und teuer, da die Verzahnungen spielfrei laufen müssen, um den Qualitätsanforderungen hinsichtlich Geräusch und Komfort zu genügen. Dies stellt besonders hohe Forderungen an Verzahnungsqualität und Lagerung der sich zueinander bewegenden Bauteile.

In der EP-A-0 870 669, die den Oberbegriff des Anspruchs 1 zeigt, ist eine Lenkeinrichtung mit unterstützendem Elektromotor beschrieben, der über ein Getriebe eine Gewindemutter drehen kann, welche über einen Kugelumlaufmechanismus eine Axialverschiebung einer Schubstange bewirkt. Dabei ist der Kugelumlaufmechanismus axial gegenüber einem Kugellager der Gewindemutter versetzt, die aus funktionellen Gründen auch noch ein weiteres (allerdings nicht gezeigtes) Lager zur Lagerung in einem Gehäuse aufweisen muss.

In der US-A-4 593 780 ist eine weitere Lenkeinrichtung mit Gewindemutter beschrieben, die ebenfalls mit zwei Kugellagern gelagert ist.

Der vorliegenden Erfindung liegt die Aufgabe zugrunde, gegenüber herkömmlichen Lenkeinrichtungen eine Lagerstelle einzusparen. Das hat den Vorteil, dass eine Lenkeinrichtung bereitgestellt wird, die für alle verschiedenen Einbauvarianten eingesetzt werden kann bei gleichzeitigem geringen Platzbedarf und hohem übertragbaren Drehmoment. Zusätzlich kann der Elektromotor flexibel angeordnet werden und die Lenkeinrichtung ermöglicht eine große Übersetzung von der Antriebsseite zur Abtriebsseite.

Die der Erfindung zugrundeliegende Aufgabe wird durch eine, auch die kennzeichnenden Merkmale des Hauptanspruchs aufweisende, gattungsgemäße Lenkvorrichtung für Kraftfahrzeuge gelöst.

Die Lösung erfolgt insbesondere dadurch, daß die von einem Elektromotor in Abhängigkeit von einem über das Lenkhandrad vorgegebenen Sollwert erzeugte Lenkunterstützung über ein Getriebe direkt auf ein Schraubengetriebe übertragen wird. Über das Schraubengetriebe wird die Lenkunterstützung auf eine Schubstange übertragen, die mit den gelenkten Rädern eines Kraftfahrzeugs verbunden sind. Somit findet über das Schraubengetriebe eine Umwandlung der über den Elektromotor aufgebrachten Rotationsbewegung in eine Translationsbewegung statt. Das Schraubengetriebe weist einen Kugelumlaufmechanismus auf, um eine geräusch- und verschleißarme Funktion bei gleichzeitigem hohen Wirkungsgrad zu gewährleisten. Über das Schraubengetriebe lassen sich auch wesentlich größere Kräfte übertragen als über eine Antriebsritzel/Schubstangen-Kombination.
Durch die direkte Kombination der beiden Getriebe entsteht ein direkter Kraftfluß vom Elektromotor zum Stellglied.
Dadurch lassen sich viel größere Übersetzungen darstellen als bei den bisher verwendeten Lenkvorrichtungen, wodurch das vom Elektromotor aufzubringende Drehmoment reduziert werden kann. Dies ermöglicht gleichzeitig den Einsatz von kleineren Elektromotoren, die bei hohen Drehzahlen laufen und einen besseren Wirkungsgrad aufweisen. Die Toleranz- und Fluchtungsproblematik, wie sie bei einer Antriebsritzel/Schubstangen-Kombination durch zwei zueinander laufende Verzahnungen oder einer Lenkvorrichtung mit einem starr über zwei Lager in einem Gehäuse gelagerten Elektromotor, der auf eine Schubstange wirkt, auftritt, tritt bei der erfindungsgemäßen Lenkvorrichtung nicht auf. Die Schubstange ist auf einer Schraubengewindeseite nur mit einem Lager im Gehäuse gelagert. Durch geeignete Wahl der Lagerung, z.B. durch Kugellager, die eine Schiefstellung von bis zu 30 Winkelminuten überbrücken können, können die Fertigungstoleranzen ausgeglichen werden.
Durch das reduzierte erforderliche Motordrehmoment wird auch das Getriebe weniger belastet, sodaß auch alternative Werkstoffe verwendet werden können. Bevorzugt wird hierbei Kunststoff, der bei den bisherigen Lösungen aus Dauerfestigkeitsproblemen nur in verstärkter Ausführung verwendet werden kann.
Das Getriebe kann in einer Ausführungsform ein Reibradgetriebe sein, was Vorteile hinsichtlich Wirkungsgrad und Spielfreiheit bringt. Zudem ist bei Überlast ein Durchrutschen möglich, sodaß auf eine zusätzliche Rutschkupplung zur Überlastsicherung verzichtet werden kann. Eine weitere Alternative ist ein Getriebe mit leicht kegeligen Stirnrädern, bei dem der Spielausgleich über eine Stellschraube oder eine Druckfeder bewerkstelligt werden kann.

Vorteilhafte und zweckmäßige Ausgestaltungen der Erfindung sind in den Unteransprüchen angegeben.

Nachfolgend sind anhand der Figuren verschiedene Ausführungsbeispiele der vorliegenden Erfindung prinzipgemäß beschrieben.
Es zeigen:
- Fig. 1: ein erstes Ausführungsbeispiel einer erfindungsgemäßen Lenkvorrichtung für Kraftfahrzeuge in Form einer Zahnstangenlenkung;
- Fig. 2: ein zweites Ausführungsbeispiel einer erfindungsgemäßen Lenkvorrichtung für Kraftfahrzeuge als Stellglied für ein gelenktes Rad;
- Fig. 3: eine Darstellung des Schnittes entlang der Linie III-III in Fig. 1 und Fig. 2;
- Fig. 4: ein drittes Ausführungsbeispiel einer erfindungsgemäßen Lenkvorrichtung für Kraftfahrzeuge mit einem Reibradgetriebe und
- Fig. 5: ein weiteres Ausführungsbeispiel einer erfindungsgemäßen Lenkvorrichtung für Kraftfahrzeuge mit einem Stirnradgetriebe.

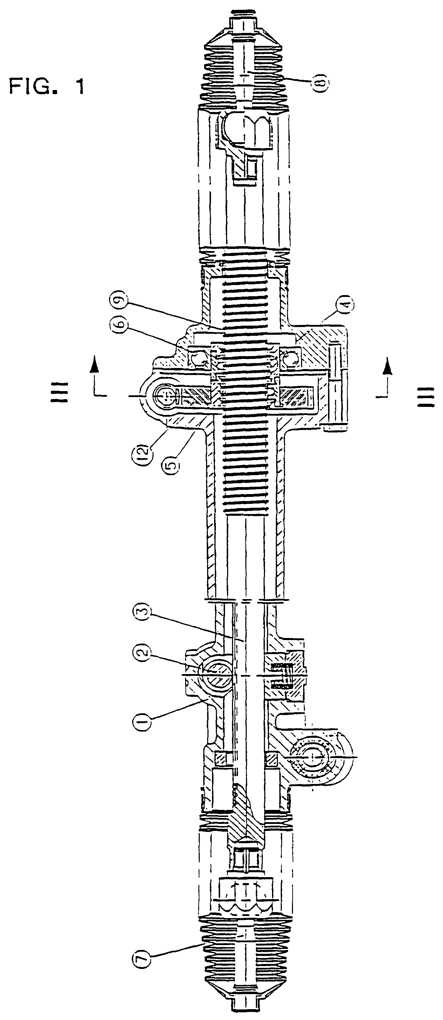

Fig. 1 zeigt eine erfindungsgemäße Lenkvorrichtung für Kraftfahrzeuge, bei dem ein Antriebsritzel 2 in einem Gehäuse 1 drehbar gelagert ist. Das Antriebsritzel 2 steht über seine Verzahnung im Eingriff mit einer Zahnstange 3, die in dem Gehäuse 1 axial verschiebbar geführt ist. Das Antriebsritzel 2 kann über eine mechanische Lenksäule mit einem Lenkhandrad in Wirkverbindung stehen. In einer Variante wirkt auf das Antriebsritzel 2 ein nicht dargestellter Elektromotor, der mit dem Lenkhandrad über eine Regelstrekke verbunden ist. Die Zahnstange weist ein Schraubengewinde auf, das hier in Form eines Kugelumlaufmechanismus ausgebildet ist. Die Zahnstange 3 ist über ein Kugelgewinde 4, eine Lenkmutter 5 und ein Lager 6 im Gehäuse 1 gelagert. Die Zahnstange 3 steht über Spurstangen 7 und 8 mit nicht dargestellten, gelenkten Rädern eines Kraftfahrzeuges in Wirkverbindung. Eine von einem Elektromotor 9 in Abhängigkeit von einem über das Lenkhandrad aufgebrachten Lenkmoment erzeugten Servounterstützung wird über ein Schneckengetriebe auf die Lenkmutter 5 übertragen. Dabei weist eine Antriebselement 10 des Elektromotors 9 eine Schnecke 11 auf, die mit einem Schneckenrad 12 kämmt. Dieses Schneckenrad 12 ist formschlüssig mit der Lenkmutter verbunden. Die vom Elektromotor 9 aufgebrachte Servounterstützung wird auf die Zahnstange 3 übertragen und die Rotationsbewegung der Antriebselement 10 des Elektromotors 9 in eine Linearbewegung der Zahnstange 3 umgewandelt.

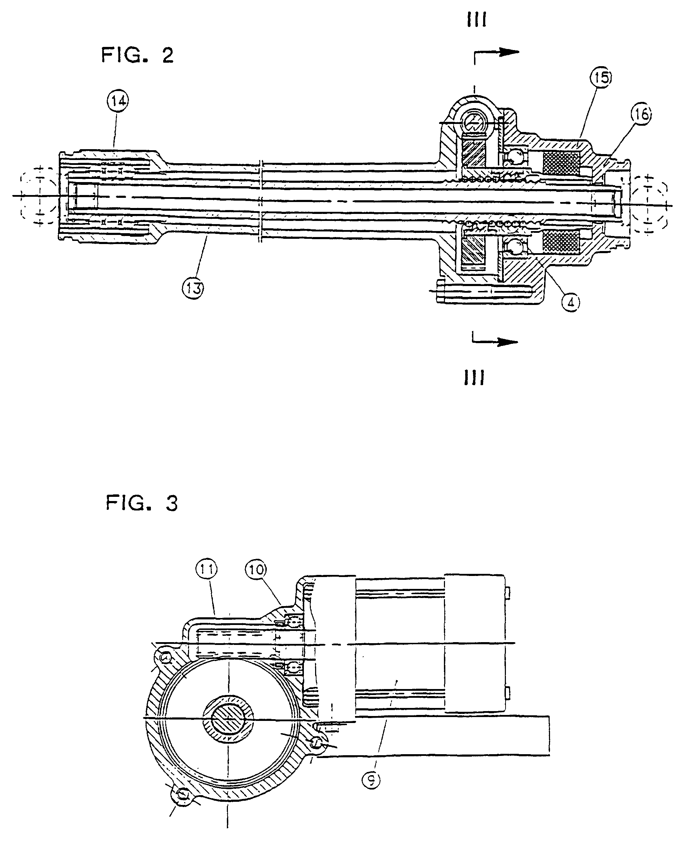

In Fig. 2 ist als eine weitere Ausführungsform einer erfindungsgemäßen Lenkvorrichtung für Kraftfahrzeuge ein Stellglied für ein gelenktes Rad dargestellt. Die Schubstange 13 weist ein Schraubengewinde auf, das hier in Form eines Kugelumlaufmechanismus ausgebildet ist. Die Schubstange 13 ist über ein Kugelgewinde 4, eine Lenkmutter 5 und ein Lager 6 im Gehäuse 1 gelagert.
Die Schubstange 13 wird durch ein Lager 14 linear geführt und gegen Verdrehen gesichert. Die Schubstange 13 steht mit nicht dargestellten, gelenkten Rädern eines Kraftfahrzeuges in Wirkverbindung. Eine von einem Elektromotor 9 in Abhängigkeit von einem über das Lenkhandrad aufgebrachten Lenkmoment erzeugten Servounterstützung wird über ein Schnekkengetriebe auf die Lenkmutter 5 übertragen. Dabei weist eine Antriebselement 10 des Elektromotors 9 eine Schnekke 11 auf, die mit einem Schneckenrad 12 kämmt. Dieses Schneckenrad 12 ist formschlüssig mit der Lenkmutter 5 verbunden. Die vom Elektromotor 9 aufgebrachte Servounterstützung wird auf die Schubstange 13 übertragen und die Rotationsbewegung der Antriebselement 10 des Elektromotors 9 in eine Linearbewegung der Schubstange 13 umgewandelt.
Zwischen dem Gehäuse 1 und einem verlängerten Fortsatz 16 der Lenkmutter 5 ist ein Sensor 15 integriert, der die axiale Verschiebung erfaßt.

In Fig. 3 ist als eine mögliche Getriebeform ein Schneckengetriebe dargestellt, das mit dem Antriebselement 10 des Elektromotors 9 in Wirkverbindung steht.

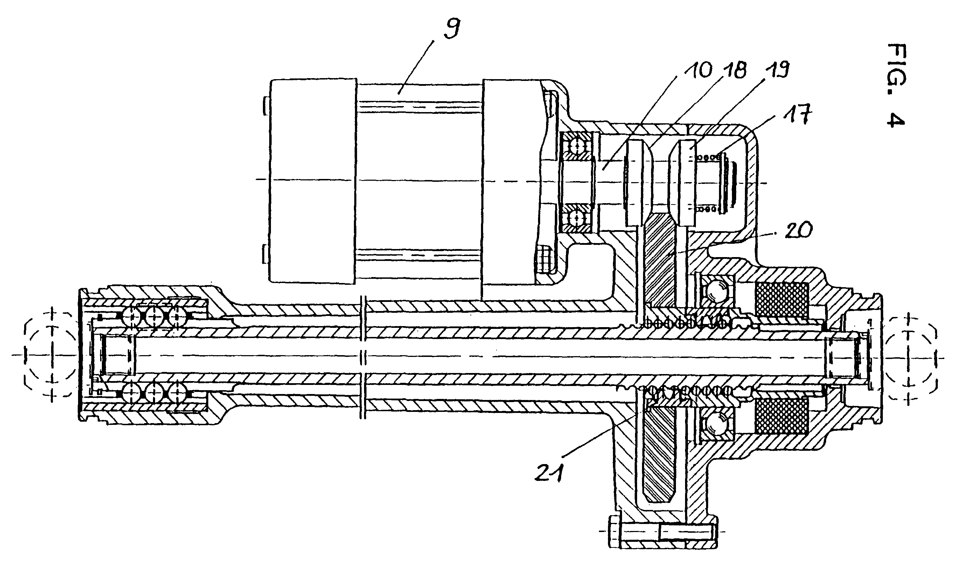

Fig. 4 zeigt einen weitere Ausgestaltungsform der Erfindung. Das Antriebselement 10 des Elektromotors 9 trägt über eine Feder 17 vorgespannte Reibscheiben 18 und 19, die über eine Reibscheibe 20 das Drehmoment des Elektromotors 9 direkt an ein Schraubengetriebe 21 übertragen.

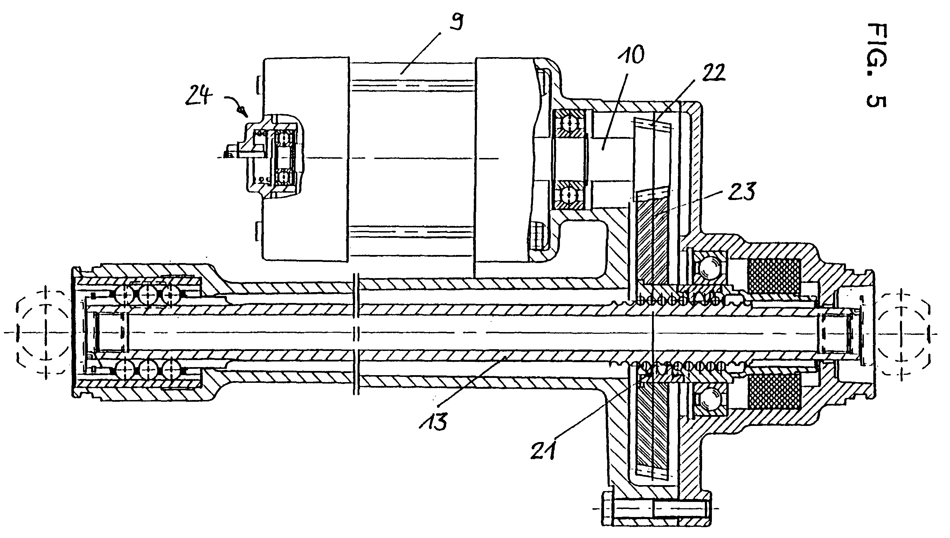

In Fig. 5 ist eine Variante der Erfindung dargestellt, bei der das Antriebselement 10 des Elektromotors 9 ein Stirnrad 22 trägt, das mit einem Stirnrad 23 kämmt. Das Stirnrad 23 ist drehfest mit dem Schraubengetriebe 21 verbunden, so daß ein direkter Durchtrieb vom Elektromotor 9 zur Schubstange 13 gegeben ist. Die Stirnräder 22 und 23 können über eine Einstellmechanismus 24 spielfrei zueinander eingestellt werden.

### Bezugszeichen

- 1: Gehäuse
- 2: Antriebsritzel
- 3: Zahnstange
- 4: Kugelgewinde
- 5: Lenkmutter
- 6: Lager
- 7: Spurstange
- 8: Spurstange
- 9: Elektromotor
- 10: Antriebselement
- 11: Schnecke
- 12: Schneckenrad
- 13: Schubstange
- 14: Lager
- 15: Sensor
- 16: Fortsatz
- 17: Feder
- 18: Reibscheibe
- 19: Reibscheibe
- 20: Reibscheibe
- 21: Schraubengetriebe
- 22: Stirnrad
- 23: Stirnrad
- 24: Einstellmechanismus

## Patentansprüche

1. Lenkvorrlohtung für Kraftfahrzeuge mit einem Elektromotor (9), einem Getriebe, einem Lager (6), einem Gehäuse (1), einer Schubstange (3; 13) und einem als Kugelumlaufmechanismus ausgebildeten Schraubengetriebe mit einer Kugelmutter (5), wobei ein Antriebselement (10) des Elektromotors (9) mit dem Getriebe In Wirkverbindung steht und über dieses direkt auf das Schraubengetriebe und die Schubstange (3; 13) wirkt, das Schraubengstriebe als Kugelumlaufmechanismus ausgebildet ist und das Lager (6) das Kugelgewinde (4) der Kugelmutter (5) Innerhalb des von Kugeln eingenommenen Bereiche umgreift,
**dadurch gekennzeichnet, daß**
die Schubstange (3; 13) auf der Schraubengewindeselte nur über dieses Lager (8) im Gehäuse (1) gelagert ist.

2. Lenkvorrichtung nach Anspruch 1, **dadurch gekennzeichnet, daß** die Verschlebung der Schubstange (3; 13) mit einem im Gehäuse (1) Integrierten Sensor (15) ertaßt wird.

3. Lenkvorrichtung nach Anspruch 1, **dadurch gekennzeichnet, daß** die Schubstange (13) durch ein weiteres Lager auf der von der Schraubengewindeseite abgewandten Seite linear geführt lat.

4. Lenkvorrichtung nach Anspruch 1, **dadurch gekennzeichnet, daß** das Antriebselement (10) eine Schneoke (11) trägt, die über ein Schneckenrad (12) auf das Schraubengstriebe wirkt.

5. Lenkvorrichtung nach Anspruch 1, **dadurch gekennzeichnet, daß** das Antriebselement (10) mit Reibscheiben (18, 19) verbunden ist, die über eine Reibscheibe (20) mit dem Schraubengetriebe in Wirkverbindung stehen.

6. Lenkvorrichtung nach Anspruch 1, **dadurch gekennzeichnet, daß** das Antriebselement (10) ein Stirnrad (22) trägt, das über ein Stirnrad (23) auf das Schraubengetriebe wirkt.

7. Lenkvorrichtung nach Anspruch 5 oder 6, **dadurch gekennzeichnet, daß** das Getriebe über eine Feder (17) spielfrei eingestellt werden kann.

## Claims

1. Steering device for a motor vehicle having an electric motor (9), a gear, a bearing (6), a housing (1), a connecting rod (3; 13) and a helical gear in the form of a recirculating ball mechanism with a ball nut (5), a drive element (10) of the electric motor (9) being operatively connected to the gear and by way of the latter acting directly on the helical gear and the connecting rod (3: 13), the helical gear taking the form of a recirculating ball mechanism and the bearing (6) gripping around the ball thread (4) of the ball nut (5) within the area occupied by the balls,
**characterized in that**
on the screw thread side the connecting rod (3; 13) is supported in the housing (1) solely by this bearing (6).

2. Steering device according to Claim 1, **characterized in that** the displacement of the connecting rod (3; 13) is registered by a sensor (15) incorporated in the housing (1).

3. Steering device according to Claim i, **characterized in that** the connecting rod (13) is linearly guided by a further bearing on that side remote from the screw thread side.

4. Steering device according to Claim 1, **characterized in that** the drive element (10) carries a worm (11), which acts on the helical gear by way of a worm gear (12).

5. Steering device according to Claim 1, **characterized in that** the drive element (10) is connected to friction discs (18, 19), which are operatively connected to the helical gear by way of a friction disc (20).

6. Steering device according to Claim 1, **characterized in that** the drive element (10) carries a cylindrical gear (22), which acts on the helical gear by way of a cylindrical gear (23).

7. Steering device according to Claim 5 or 6, **characterized in that** the gear can be adjusted free of backlash by way of a spring (17).

## Revendications

1. Dispositif de direction pour véhicules automobiles comprenant un moteur électrique (9), une boîte de vitesses, un palier (6), un carter (1), une bielle (3; 13) et un engrenage hélicoïdal réalisé sous la forme d'un mécanisme à recirculation de billes avec un écrou à billes (5), un élément d'entraînement (10) du moteur électrique (9) coopérant activement avec la boîte de vitesses et agissant par le biais de celle-ci directement sur l'engrenage hélicoïdal et la bielle (3; 13), l'engrenage hélicoïdal étant réalisé sous forme d'un mécanisme à recirculation de billes et le palier (6) venant en prise autour du filetage à billes (4) de l'écrou à billes (5) à l'intérieur de la région occupée par les billes,
**caractérisé en ce que**
la bielle (3; 13) est montée dans le carter (1) du côté du filetage de la vis uniquement par le biais de ce palier (6).

2. Dispositif de direction selon la revendication 1, **caractérisé en ce que** le déplacement de la bielle (3; 13) est détecté avec un capteur (15) intégré dans le carter (1).

3. Dispositif de direction selon la revendication 1, **caractérisé en ce que** la bielle (13) est guidée linéairement par un autre palier sur le côté opposé au côté du filetage de la vis.

4. Dispositif de direction selon la revendication 1, **caractérisé en ce que** l'élément d'entraînement (10) porte une vis sans fin (11), qui agit par le biais d'une roue à denture hélicoïdale (12) sur l'engrenage hélicoïdal.

5. Dispositif de direction selon la revendication 1, **caractérisé en ce que** l'élément d'entraînement (10) est connecté à des disques de friction (18, 19) qui coopèrent activement avec l'engrenage hélicoïdal par le biais d'un disque de friction (20).

6. Dispositif de direction selon la revendication 1, **caractérisé en ce que** l'élément d'entraînement (10) porte un pignon (22) qui agit sur l'engrenage hélicoïdal par le biais d'un pignon (23).

7. Dispositif de direction selon la revendication 5 ou 6, **caractérisé en ce que** la boîte de vitesses peut être ajustée sans jeu par le biais d'un ressort (17).
